# EUROPÄISCHE PATENTSCHRIFT

(11) **EP 1 362 224 B1**
(45) Veröffentlichungstag und Bekanntmachung des Hinweises auf die Patenterteilung: **06.05.2015**
(21) Anmeldenummer: 02716746.9
(22) Anmeldetag: 08.02.2002
(51) Int. Cl.: B65G 53/46, B65G 65/48, G01G 11/08

(54) **DOSIERVORRICHTUNG**
DOSING DEVICE
DISPOSITIF DE DOSAGE

(30) Priorität: 10.02.2001 DE 10106798
(43) Veröffentlichungstag der Anmeldung: 19.11.2003
(73) Patentinhaber: Pfister GmbH, 86165 Augsburg (DE)
(72) Erfinder: HÄFNER, Hans, Wilhelm, 86551 Aichach-Walchshofen (DE)
(74) Vertreter: Fiener, Josef
(86) Internationale Anmeldenummer: PCT/EP2002/001335
(87) Internationale Veröffentlichungsnummer: WO 2002/065067

(56) Entgegenhaltungen:
- WO-A-98/53283
- DE-A- 19 718 567
- US-A- 5 324 142
- PATRICK KLOVEN: "A Novel,gravimetric feeder for powder and granular products" ADVANCES IN INSTRUMENTATION, INSTRUMENT SOCIETY OF AMERICA, RESEARCH TRIANGLE PARK, US, Bd. 4, Nr. 25, 26. Oktober 1970 (1970-10-26), Seiten 8171-8176, XP002075386

## Beschreibung

Die Erfindung betrifft eine Dosiervorrichtung zum kontinuierlichen gravimetrischen Dosieren von schüttfähigem Gut gemäß den oberbegrifflichen Merkmalen des Patentanspruchs 1.

Eine derartige Dosiervorrichtung ist aus der WO 98/50764 der Anmelderin bekannt. XP002075386 und WO 98 53 283 offenbaren ebenfalls bekannte Dosiervorrichtungen. Hierbei ist insbesondere für die Drehrohrofenbefeuerung beim Zementbrennprozeß ein Dosierrotor vorgesehen, der durch im wesentlichen radial verlaufende Mitnehmerstege in eine Vielzahl von Kammern unterteilt ist.

Obwohl sich diese Vorrichtung insbesondere zur Dosierung von grobkörnigem Schüttgut eignet, kann es bei feineren oder staubförmigen Schüttgütern bei der Entleerung und Beschickung nachfolgender Fördergeräte zu Problemen kommen, da es bei solchem Schüttgut zum sog. "Schießen", also einer unkontrollierten Förderung kommen kann, insbesondere wenn das Schüttgut im Bunker fluidisiert wird und dadurch an der Eingangsseite der Dosiervorrichtung ein höherer Druck als an der Abgabeseite herrscht. Derartige Erscheinungen zwischen dem umlaufenden Rotor und stationären Gehäuseteilen verursachen Förderstörungen und erhebliche Dosierungenauigkeiten. Zudem ist hierdurch das Mitnahmevolumen des Rotors relativ gering, sofern nicht ein besonders großer Rotordurchmesser oder höhere Umlaufgeschwindigkeiten des Rotors vorgesehen sind.

Demzufolge liegt der Erfindung die Aufgabe zugrunde, eine gattungsgemäße Dosiervorrichtung hinsichtlich des möglichen Durchsatzes und der Meßgenauigkeit zu verbessern.

Diese Aufgabe wird gelöst mit einer Dosiervorrichtung gemäß den Merkmalen des Patentanspruchs 1.

Durch die achsgleiche Anordnung eines zweiten (und ggf. auch dritten oder vierten) Dosierrotors in einem Gehäuse mit zueinander versetzten Entleerungsöffnungen wird ein unkontrolliertes "Schießen" des geförderten Schüttgutes vermieden, da der durch die Dosiervorrichtung laufende Gutstrom über eine längere Meßstrecke von 360° (oder ggf. mehr) geführt wird. Zudem wird hierdurch ein kontrollierter Druckabbau erreicht, insbesondere wenn an den beiden Dosierrotoren unterschiedliche Gehäusevolumina vorliegen, nämlich am zweiten (und ggf. darauffolgenden) Dosierrotor das Gehäusevolumen größer ist als beim ersten. Ein ähnlicher Effekt läßt sich erzielen, wenn der zweite Dosierrotor mit höherer Umlaufgeschwindigkeit angetrieben wird als der in Förderrichtung erste Rotor. Damit werden auch staubförmige Schüttgüter, insbesondere für die Verwendung als Brennstoffe in Drehrohröfen bei der Zementherstellung oder auch bei der Zement-Abfüllung, hochgenau dosiert. Durch diese Förderung über 360° in zwei (oder mehr) versetzten Ebenen wird insgesamt eine erhöhte Kurz- und Langzeitgenauigkeit erreicht, da das jeweils in der relativ langen Dosierstrecke befindliche Gut ggf. mehrfach gravimetrisch erfaßt wird und dementsprechend die erforderliche Nachförderung aus dem Vorratsbehälter exakter gesteuert werden kann.

In bevorzugter Ausführung ist dabei der obere Dosierrotor eng in das Gehäuse eingepaßt, um die gewünschte Dichtwirkung zu erzielen, während der untere, damit druckentlastete Dosierrotor mit großem Spaltmaß zu seiner Deckelfläche (Zwischenwand des Gehäuses) umlaufen kann. Die über zwei (oder mehr) Ebenen verlaufende Meßstrecke bis zur zweiten Entleerungsöffnung wird bevorzugt über einen Winkel von etwa 360° geführt, wenngleich bei drei oder vier Dosierrotoren auch Meßstrecken über 540° bzw. 720° möglich sind, wenn dies das Material bzw. die Druckverhältnisse erfordern sollten. Der Abwurf kann jedoch auch bereits nach 270° oder 180° erfolgen, wenn die Zwischenöffnung zwischen den beiden Rotoren beispielsweise bei 90° oder 120° Umlaufwinkel ab der Beschickungsöffnung angeordnet ist.

In zweckmäßiger Weiterbildung sind die Dosierrotoren mit ihren Mitnehmerstegen aus Standardisierungsgründen gleich ausgebildet, so daß bei der Umlaufbewegung der Schüttgutstrang ohne Neigung zum "Schießen" gefördert werden kann.

Weitere vorteilhafte Ausgestaltungen sind Gegenstand der Unteransprüche. Nachfolgend wird ein Ausführungsbeispiel anhand der Zeichnung näher erläutert und beschrieben. Es zeigen:
- Fig. 1: eine Draufsicht einer Dosiervorrichtung;
- Fig. 2: eine Seitenansicht der Dosiervorrichtung; und
- Fig. 3: eine Schnittdarstellung der Dosiervorrichtung.

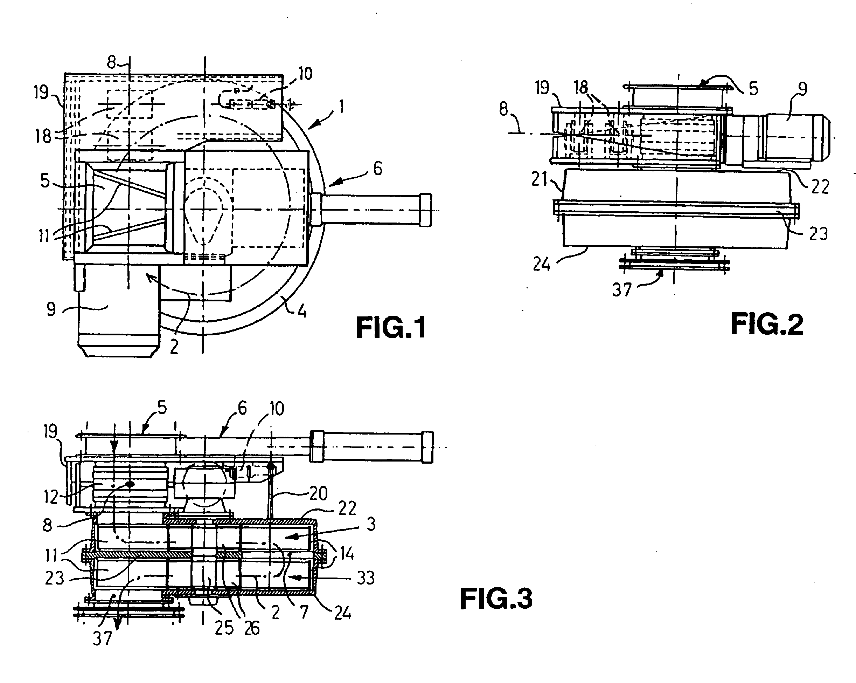

In Fig. 1 ist eine Dosiervorrichtung 1 dargestellt, die im wesentlichen aus zwei übereinander angeordneten Dosierrotoren 3 und 33 (vgl. Fig. 3) besteht, die in einem Gehäuse 4 umlaufen, das bis auf eine Beschickungsöffnung 5 und eine darunter liegende Entleerungsöffnung 37 vollständig geschlossen ist. Die Beschickungsöffnung 5 und die Entleerungsöffnung 37 (vgl. Fig. 2 und 3) sind hierbei übereinander angeordnet (vgl. Fig. 3), so daß sich eine möglichst lange, strichpunktiert angedeutete Meßstrecke 2 über hier etwa 360° ergibt, wobei eine Zwischenöffnung 7 zwischen den beiden Kammern der Dosierrotoren 3 und 33 etwa bei einem Umlaufwinkel von 180° vorgesehen ist.

An der Beschickungsöffnung 5 ist ein Verschlußschieber 6 vorgesehen, der bei geöffneter Stellung aus einem nicht dargestellten Bunker bzw. Vorratsbehälter oder einem Trichter zugeführtes Schüttgut zuströmen läßt. Anstatt des Verschlußschiebers 6 können hierbei auch Austräghilfen angeordnet sein, um den Austrag des Schüttgutes aus einem Schüttgutsilo zur Dosiervorrichtung 1 sicherzustellen. Unterhalb des Verschlußschiebers 6 sind zur Bildung einer Schwenkachse 8, um die das Gehäuse 4 unter Gutbelastung verschwenken kann, zwei Schwenklager 18 vorgesehen. Diese Schwenkachse 8 verläuft bevorzugt durch -in Draufsicht gesehen- die Mitte der oberen Beschickungsöffnung 5 und der unteren Entleerungsöffnung 37, um Fehlereinflüsse bei der Momentanlastmessung durch die Gutzufuhr bzw. Entleerung zu eliminieren.

Zum Antrieb der Dosierrotoren 3 und 33 ist eine Antriebsvorrichtung 9 vorgesehen, die hier beispielsweise aus einem Elektromotor und einem Getriebe besteht, dessen Ausgang in eine vertikale Antriebswelle 25 für beide Rotoren 3 und 33 mündet. Die Antriebsvorrichtung 9 ist hierbei direkt auf das Gehäuse 4 montiert, so daß es Schwenkbewegungen um die Schwenkachse 8 mitvollziehen kann. Bei der Schwenkbewegung um die Schwenkachse 8, die durch die Gutzufuhr und die Förderung des Schüttgutstranges entlang der Meßstrecke 2 verursacht werden, stützt sich das Gehäuse 4 gegen eine stationär angeordnete Kraftmeßvorrichtung 10 ab, die hier beispielsweise über eine Zugstange 20 (vgl. Fig. 3) mit dem die beiden Dosierrotoren 3 und 33 aufnehmenden Gehäuse 4 verbunden ist. In diesem Ausführungsbeispiel ist die Kraftmeßvorrichtung 10 an einem Rahmen 19 befestigt, der mit dem ebenfalls stationär angeordneten Gehäuse des Verschlußschiebers 6 verbunden ist. Es kann jedoch auch ein gesondertes Abstützgerüst für die Kraftmeßvorrichtung 10 vorgesehen sein.

Als Kraftmeßvorrichtung 10 können verschiedene Arten von Kraftmeßzellen Verwendung finden, bevorzugt werden jedoch weglos arbeitende Meßgeber, wie Dehnmeßstreifen, Scherkraftgeber oder dergleichen verwendet. Bei diesem Aufbau wird das jeweilige Gewicht des über die Meßstrecke 2 geförderten Gutstromes erfaßt und das Produkt aus Momentlast und Fördergeschwindigkeit zur Ermittlung des Durchsatzes gebildet. Zur Änderung des Durchsatzes oder zur Einstellung einer Sollmenge wird über eine nicht näher dargestellte, an sich bekannte Regelvorrichtung die Drehzahl der Antriebsvorrichtung 9 und damit der Dosierrotoren 3 und 33 in Abhängigkeit zur Momentanlast bzw. gewünschten Förderstärke nachgeregelt.

Die Dosierrotoren 3 und 33 weisen jeweils sternförmig verlaufende Mitnehmerstege 11 auf, die zumindest eine Teilhöhe der Innenhöhe des Gehäuses 4 einnehmen. Durch die obere Gehäusewand 22 (vgl. Fig. 2 und 3) des Gehäuses 4 ist ein Zuführstutzen 12 hindurchgeführt, der einen unteren Auslaß zur Kammer des ersten Dosierrotors 3 aufweist und durch den die Schwenkachse 8 mittig hindurch verläuft. Die sternförmig angeordneten Mitnehmerstege 11 des jeweiligen Rotors 3 und 33 sind hier durch je einen Außenring 14 (vgl. Fig. 3) miteinander verbunden, so daß sich eine hohe Stabilität der Rotoren 3 und 33 ergibt. Zudem bewirkt der außen bis nahezu zur oberen Gehäusewand 22 hochgezogene Außenring 14, daß das durch die Beschickungsöffnung 5 im Zuführstutzen 12 zugeführte Schüttgut nicht nach außen hin abwandern kann. Entsprechendes gilt für den unteren Dosierrotor 33 mit bevorzugt identischem Aufbau.

Der Außenring 14 ist in bevorzugter Ausgestaltung nach außen hin umgebördelt, so daß dieser mit geringem Spiel bezüglich des Gehäusemantels 21 umläuft. Zwischen dem Außenring 14 und dem Gehäusemantel 21 wird hierbei ein Umfangsspalt gebildet, in dem sich ggfs. feinere Partikel des Schüttgutes ansammeln können, um mittels Hilfsmitnehmern zur Zwischenöffnung 7 in einer Zwischenwand 23 und dann zur Entleerungsöffnung 37 mittransportiert zu werden. Die Hilfsmitnehmer sind bevorzugt durch die äußeren Enden der Mitnehmerstege 11 gebildet, indem beispielsweise der Außenring 14 nur auf die Mitnehmerstege 11 aufgesetzt ist. Es sei darauf hingewiesen, daß die Entleerungsöffnung 37 in radialer Richtung über den Außenrand 14 hinausragt und somit mit dem Umfangsspalt 16 in Verbindung steht, so daß auch in dem Umfangsspalt befindliches Gut an der Entleerungsöffnung 37 nach unten herausfällt und somit hinsichtlich der Momentanlast an der Meßstrecke 2 miterfaßt wird. In dem Umfangsspalt 16 herrscht zudem im Entleerbereich ein geringer Überdruck, so daß der Austrag erleichtert wird bzw. ein Festbacken von Partikeln verhindert wird. Dies kann durch eine Ausblasvorrichtung unterstützt werden.

In Fig. 2 ist eine um 90° gedrehte Seitenansicht der Dosiervorrichtung 1 gezeigt, wobei insbesondere der Verlauf der durch die Schwenklager 18 gebildeten Schwenkachse 8 ersichtlich ist. Zudem ist der Aufbau des Gehäuses 4 mit einem Gehäusemantel 21, einer oberen Gehäusewand 22 und einer unteren Gehäusewand 24 dargestellt, wobei das Gehäuse 4 etwa mittig eine Zwischenwand 23 mit der Zwischenöffnung 7 aufweist (vgl. auch Fig. 3). Die Zwischenwand 23 ist hier etwas zur oberen Gehäusewand 22 hin versetzt, so daß die Kammer des oberen Rotors 3 eine geringere Höhe besitzt als die des unteren Rotor 33. Durch diese unterschiedlichen Volumina wird ein Druckabbau ("Entspannung") erreicht und damit ein kontrollierter Abwurf des Schüttgutes an der Zwischenöffnung 7 in den unteren Rotor 33 sichergestellt.

In Fig. 3 ist ein Teilschnitt der Dosiervorrichtung 1 dargestellt, wobei unterhalb der Beschickungsöffnung 5 die sternförmig verlaufenden Mitnehmerstege 11 erkennbar sind, die unter Antrieb durch die auf die Oberseite des Gehäuses 4 aufgesetzte Antriebsvorrichtung 9 das zugeführte Schüttgut entlang der Meßstrecke 2 um etwa 180° zu der Zwischenöffnung 7 und dann um weitere 180° zur Entleerungsöffnung 37 fördern. Hierdurch ergibt sich eine Momentanlast auf der hier nach rechts weisenden Hälfte der Dosiervorrichtung 1, so daß die mit Abstand von der Schwenkachse 8 angeordnete Kraftmeßvorrichtung 10 über den Zuganker 20 hinein belastet wird. Die Kraftmeßvorrichtung 10 ist zur Erzielung einer möglichst großen, effektiven Hebellänge am Umfang des Gehäuses 4 angeordnet, kann jedoch auch noch weiter entfernt oder näher zur Schwenkachse 8 hin befestigt sein.

Aus dieser Schnittdarstellung ist neben den bereits beschriebenen Bauteilen der Dosiervorrichtung 1 auch eine zentrale Antriebswelle 25 zum Antrieb beider Rotoren 3 und 33 ersichtlich, ebenso die Rotornaben 26, an denen die jeweiligen Mitnehmerstege 11 der beiden Rotoren 3 und 33 sternförmig angeordnet sind. Die Mitnehmerstege 11 des oberen Rotors 3 laufen dabei eng eingepaßt zwischen Deckelwand 22 und der Zwischenwand 23 um, während der untere Rotor 33 mit größerem Spaltmaß zur Zwischenwand 23 hin auf der unteren Gehäusewand 24 in gleicher Drehrichtung umläuft.

Dadurch wird beim Umlaufbetrieb der Dosiervorrichtung 1 ein Gutstrom an den Mitnehmerstegen 11 ausgebildet und dieser zur Entleerungsöffnung 37 geführt. Diese strangförmige Anhäufung des Gutstromes über den Mitnehmerstegen 11 ergibt sich auch durch den Zuführstutzen 12, der in der oberen Gehäusewand 22 befestigt und als elastischer Kompensator ausgebildet ist.

Durch die gegenüber bekannten Dosiervorrichtungen wesentlich längeren Meßstrecke 2 der beiden Rotoren 3 und 33 von hier 360° ergibt sich somit eine druckstoßfeste Ausführung der Dosiervorrichtung 1. Dies kann noch gesteigert werden, wenn drei oder gar vier derartiger Dosierrotoren in "Stapelbauweise" übereinander auf der gleichen Antriebswelle 25 angeordnet sind. Es sei darauf hingewiesen, daß die Mitnehmerstege 11 der Rotoren 3 und 33 neben der hier gezeichneten exakten radialen Ausrichtung auch leicht gekrümmt oder (in Förderrichtung) gewölbt ausgeführt sein können.

Auch die Drehzahl kann vom Rotor 3 zum Rotor 33 (und ggf. nachfolgenden, weiteren Dosierrotoren) hin geringfügig ansteigen, beispielsweise durch ein in der Antriebswelle 25 integriertes Planetengetriebe für den Rotor 33, so daß durch die damit bewirkte, schnellere Abförderung zur Entleerungsöffnung 37 hin gegenüber dem oberen Rotor 3 ebenfalls ein kontrollierter Druckabbau erfolgt, um der "Schießneigung" entgegen zu wirken.

## Patentansprüche

1. Dosiervorrichtung zum kontinuierlichen, gravimetrischen Dosieren von schüttfähigem Gut, insbesondere staubförmigen Brennstoffen, mit einem Gehäuse (4), wobei ein Gutstrom mit einem um eine Drehachse angetriebenen Dosierrotor (3) unter Ermittlung der Momentanlast über eine Messstrecke (2) in dem Gehäuse (4) von einer Beschickungsöffnung (5) zu einer versetzt angeordneten Entleerungsöffnung (37) förderbar ist, sowie mit einer Kraftmessvorrichtung (10), die zur Erfassung der Momentanlast des gesamten über die Messstrecke (2) geführten Gutstromes vorgesehen ist, wobei wenigstens ein zweiter Dosierrotor (33) mit einer zu einer Zwischenöffnung (7) versetzten Entleerungsöffnung (37) achsgleich angeordnet ist, wobei der erste bzw. obere Dosierrotor (3) auf einer die Zwischenöffnung (7) aufweisenden Zwischenwand (23) des Gehäuses (4) umläuft,
**dadurch gekennzeichnet, dass**
das Gehäuse (4) beide Dosierrotoren (3, 33) aufnimmt, die gemeinsam die Messstrecke (2) von wenigstens 360° Drehwinkel um die Drehachse zwischen der Beschickungsöffnung (5) und der Entleerungsöffnung (37) bilden.

2. Dosiervorrichtung nach Anspruch 1, **gekennzeichnet durch** die Ausbildung als Dosierrotoren (3, 33) mit im wesentlichen radial verlaufenden Mitnehmerstegen (11).

3. Dosiervorrichtung nach Anspruch 2, **dadurch gekennzeichnet, dass** die Mitnehmerstege (11) an ihren radial äußeren Enden mit einem Außenring (14) verbunden sind.

4. Dosiervorrichtung nach Anspruch 3, **dadurch gekennzeichnet, dass** der Außenring (14) der Dosierrotoren (3, 33) jeweils unter Bildung eines Umfangsspattes einen geringfügig kleineren Durchmesser als den Durchmesser des Gehäuses (4) aufweist.

5. Dosiervorrichtung nach einem der Ansprüche 1 bis 4, **dadurch gekennzeichnet, dass** der erste bzw. obere Dosierrotor (3) eine geringere Höhe als der zweite, untere Dosierrotor (33) aufweist.

## Claims

1. Dosing device for continuous, gravimetric dosing of bulk material, in particular dust-like fuels with a housing (4), wherein a material flow is conveyed with a dosing rotor (3) rotatable around a rotational axis under determination of the momentary load over a measuring path (2) in the housing (4) from a feed opening (5) to an offset discharge opening (37), and with a load-sensing apparatus (10) which detects the momentary load of the material flow guided over the entire measuring path (2), wherein at least a second metering rotor (33) having a discharge opening (37) offset to an intermediate opening (7) is arranged coaxially and wherein the first or upper metering rotor (3) rotates on a partition wall (23) of the housing (4) comprising the intermediate opening (7),
**characterized in that**
the housing (4) includes both dosing rotors (3, 33) which form the measuring path (2) of at least 360° rotation angle around the rotation axis between the feed opening (5) and the discharge opening (37).

2. Dosing device according to claim 1, **characterized by** the configuration as metering rotors (3, 33) having substantially radially extending entrainment ribs (11).

3. Dosing device according to claim 2, **characterized in that** the entrainment ribs (11) are connected at their radially outside with an outer ring (14).

4. Dosing device according to claim 3, **characterized in that** each outer ring (14) of the metering rotors (3, 33) has a slightly smaller diameter than the diameter of the housing (4) to form a circumferential gap.

5. Dosing device according to one of claims 1 to 4, **characterized in that** the first or upper dosing rotor (3) has a smaller height than the second lower dosing rotor (33).

## Revendications

1. Dispositif de dosage dévolu au dosage gravimétrique continu d'une matière apte à l'écoulement, en particulier de combustibles sous forme de poussières, équipé d'un boîtier (4), un flux de matière pouvant être convoyé depuis un orifice d'alimentation (5) vers un orifice de vidage (37) occupant une position décalée, par un rotor de dosage (3) entraîné autour d'un axe de rotation, avec détermination de la charge instantanée sur un trajet de mesure (2) dans ledit boîtier (4) ; ainsi que d'un dispositif (10) de mesure de forces qui est prévu pour détecter la charge instantanée de l'intégralité dudit flux de matière guidé sur ledit trajet de mesure (2), au moins un second rotor de dosage (33) occupant une position coaxiale avec un orifice de vidage (37) décalé par rapport à un orifice intermédiaire (7), sachant que le premier rotor de dosage (3), ou rotor supérieur, accomplit une rotation sur une paroi intermédiaire (23) dudit boîtier (4) qui est pourvue dudit orifice intermédiaire (7),
**caractérisé par le fait que**
le boîtier (4) reçoit les deux rotors de dosage (3, 33) formant, associativement, le trajet de mesure (2) d'un angle de rotation d'au moins 360° autour de l'axe de rotation, entre l'orifice d'alimentation (5) et 1 orifice de vidage (37).

2. Dispositif de dosage selon la revendication 1, **caractérisé par** la réalisation en tant que rotors de dosage (3, 33) munis de membrures d'entraînement (11) s'étendant, pour l'essentiel, dans le sens radial.

3. Dispositif de dosage selon la revendication 2, **caractérisé par le fait que** les membrures d'entraînement (11) sont reliées à une bague extérieure (14) par leurs extrémités radialement extérieures.

4. Dispositif de dosage selon la revendication 3, **caractérisé par le fait que** la bague extérieure (14) des rotors de dosage (3, 33) présente un diamètre légèrement plus petit que le diamètre du boîtier (4), en réservant un interstice circonférentiel respectif.

5. Dispositif de dosage selon l'une des revendications 1 à 4, **caractérisé par le fait que** le premier rotor de dosage (3), ou rotor supérieur, présente une plus faible hauteur que le second rotor de dosage (33), ou rotor inférieur.
